Europäisches Patentamt

European Patent Office

Office européen des brevets

(11) Veröffentlichungsnummer : **0 085 955**
**B1**

(12) **EUROPÄISCHE PATENTSCHRIFT**

(45) Veröffentlichungstag der Patentschrift :
19.07.89

(51) Int. Cl.[4] : **G 02 B 26/02**, G 02 B 6/38

(21) Anmeldenummer : 83101025.1

(22) Anmeldetag : 03.02.83

(54) **Schalter für Lichtleiter.**

(30) Priorität : 05.02.82 DE 3203930

(43) Veröffentlichungstag der Anmeldung :
17.08.83 Patentblatt 83/33

(45) Bekanntmachung des Hinweises auf die Patenterteilung : 19.07.89 Patentblatt 89/29

(84) Benannte Vertragsstaaten :
AT BE CH FR GB IT LI NL SE

(56) Entgegenhaltungen :
DE–A– 2 903 848
FR–A– 2 384 276
US–A– 4 186 997
7th European Conf. on Optical Comm., Copenhagen,
1981, p. 15-1 bis 15-4

(73) Patentinhaber : Siemens Aktiengesellschaft Berlin
und München
Wittelsbacherplatz 2
D-8000 München 2 (DE)

(72) Erfinder : Störk, Peter
Am Lindenberg 143
D-8134 Pöcking (DE)
Erfinder : Thom, Günter
Untertaxetweg 6
D-8035 Gauting (DE)

**Beschreibung**

Die Erfindung bezieht sich auf einen Schalter für Lichtleiter, deren Enden im gekoppelten Zustand fluchtend aufeinander ausgerichtet sind.

Durch die deutsche Offenlegungsschrift 28 10 858 ist ein derartiger Schalter bekannt geworden. Danach ist ein beweglicher Lichtleiter an einer transversal auslenkbaren Schaltzunge befestigt und ein im Schalter festliegender Lichtleiter an einem festen Trägerteil des Schalters gehalten. Die Schaltzunge erstreckt sich in der Längsrichtung des Lichtleiterendes. Das Lichtleiterende wird durch Verbiegen der Schaltzunge zwischen den beiden Schaltstellungen hin und her bewegt. Dabei steht die fiktive Biegeachse senkrecht zum Lichtleiterende. Die Schaltzunge wird somit bei der Auslenkung gegenüber dem festen Lichtleiterende gekippt. Dadurch ist es schwierig, wenn nicht unmöglich, den Endabschnitt des beweglichen Lichtleiterendes in genaue knickfreie Fluchtung mit dem festen Lichtleiterende zu bringen. Bereits das Abknicken der Faserachsen bewirkt eine Kopplungsdämpfung selbst bei weitgehender Lageübereinstimmung der Lichtleiterstirnseiten. Das Kippen erschwert aber auch die genaue Zentrierung der Faserendflächen aufeinander.

Aus der Literaturstelle « Simple and Reliable Optical Bypass Switch for Fiber-optic Data Bus Application » aus 7th Conf. on Optical Comm. Copenhagen, 1981, Seiten 15-1 bis 15-4″ ist ein Schalter für Lichtleiter bekannt, bei dem ebenfalls die Enden der Lichtleiter im gekoppelten Zustand fluchtend aufeinander ausgerichtet sind. Bei diesem bekannten Schalter werden die beweglichen Leiterenden bei Schaltvorgängen mittels eines Relais zwischen zwei über Feingewinde einstellbare Anschlagvorrichtungen hin und her bewegt. Nachteilig bei diesem Schalter ist, daß die Verwendung eines Relais einen hohen Vertigungsaufwand und die Verwendung der einstellbaren Anschlagvorrichtungen zusätzlich einen hohen Justieraufwand erfordern.

Der Erfindung liegt die Aufgabe zugrunde, einen Schalter für Lichtleiter zu schaffen, bei dem eine genaue Fluchtung der beiden Lichtleiterenden ohne hohen Fertigungs- und Justieraufwand ermöglicht wird.

Diese Aufgabe wird durch die Erfindung gemäß Anspruch 1 gelöst. Durch die parallele Biegeachse erfolgt die Auslenkung des Halteteiles achsparallel zum Lichtleiterende, so daß ein Kippen oder Knicken im Faserverlauf in beiden Schaltstellungen vermieden wird. Damit sind die Koppelverluste auch bei einem Umschalter mit zwei feststehenden Lichtleiterenden niedrig. Durch die achsparallele Auslenkung wird die genaue Ausrichtung der Lichtleiterenden erleichtert.

Durch Weiterbildungen nach den Ansprüchen 2 und 5 kann das Lichtleiterende aus seiner Längsrille angehoben, quer versetzt und in die benachbarte Längsrille abgesenkt werden. Sind beide Längsrillen mit festen Lichtleiterenden belegt, so ergibt sich ein bistabiler Umschalter, wobei in beiden Schaltstellungen eine genaue Fluchtung der gekoppelten Lichtleiterenden gesichert ist.

Durch die Weiterbildung nach Anspruch 3 wird die zweidimensionale Auslenkbarkeit in konstruktiv einfacher Weise realisiert. Durch die parallelen Biegeachsen des Längssteges ist bei der entsprechenden Auslenkbewegung ebenfalls Achsparallelität des Lichtleiterendes gewährleistet.

Durch die Weiterbildung nach den Ansprüchen 4 und 6 ist es möglich, den Schalter auch als Stecker zu verwenden. Die zweidimensionale Auslenkbarkeit des Halteteiles ermöglicht beim Zusammenstecken der Kupplungsteile eine Selbstzentrierung des Lichtleiterendes in der entsprechenden Längsrille. Durch eine Öffnung in den Kupplungsteilen kann das Halteteil für das bewegliche Lichtleiterende von außen zugänglich und z. B. über einen Betätigungsmechanismus bedienbar gemacht werden.

Im folgenden wird die Erfindung anhand eines in der Zeichnung dargestellten Ausführungsbeispieles näher erläutert. Die dargestellten

Fig. 1 und 2 zeigen in perspektivischer schematisierter Darstellung zwei Kupplungsteile vor dem Zusammensetzen mit einem Lichtleiterende, das mit einem anderen, nicht dargestellten Lichtleiterende optisch verbunden werden soll,

Fig. 3 zeigt einen teilweisen Längsschnitt durch die beiden Kupplungsteile im Bereich der Kupplungsstelle für die beiden Lichtleiter nach dem Zusammenbau.

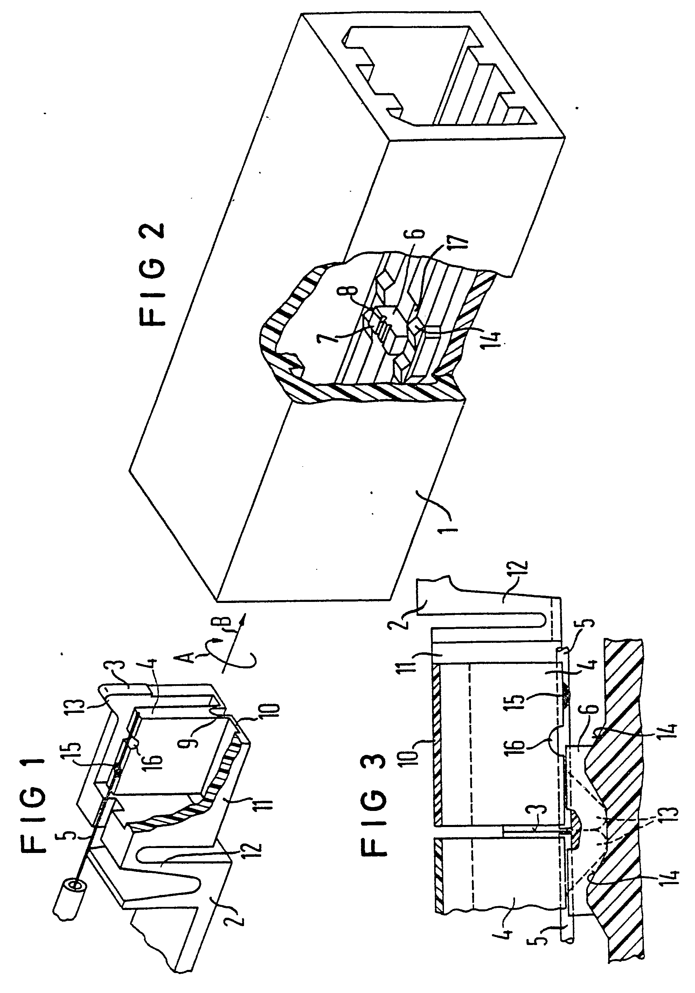

Nach den Fig. 1 und 2 ist ein erstes Kupplungsteil 1 hülsenartig ausgebildet. Ein zweites Kupplungsteil 2 ist der günstigeren Darstellung wegen zum ersten Kupplungsteil 1 um 180° entsprechend dem Pfeil A verdreht dargestellt. Das zweite Kupplungsteil 2 weist ein Halteteil 4 auf, das mit einer Längsnut versehen ist, in der das Lichtleiterende 5 z. B. durch Kleben fixiert ist.

In der Mitte des ersten Kupplungsteiles ist ein klotzartiger, in das Innere des Kupplungsteiles ragender Auflageblock 6 angeordnet. Dieser weist eine Auflagefläche 7 auf, die mit Längsrillen 8 versehen ist. Die Längsrillen 8 und die Längsnut in dem Halteteil 4 sind im Querschnitt so bemessen, daß sie im zusammengesteckten Zustand jeweils die Hälfte des Lichtleiters 5 umgreifen. Im zusammengefügten Zustand der beiden Kupplungsteile überlappt das Halteteil 4 mit seiner das Lichtleiterende 5 aufnehmenden Fläche die Auflagefläche 7 etwa bis zur Mitte. Dabei zentriert sich das Lichtleiterende 5 in der Längsrille 8. In gleicher Weise zentriert sich das andere nicht dargestellte Lichtleiterende in der Längsrille 8. Das Halteteil 4 ist über zwei dünne Stege 9 mit zwei Längsstegen verbunden. Die Stege erstrecken sich parallel zum Lichtleiterende, so daß das in Richtung dieses Lichtleiterendes frei ragende Halteteil achsparallel seitlich federnd ausgelenkt werden kann. Die dünnen Längsstege 10 erstrecken sich ebenfalls parallel zum Lichtleiterende, jedoch quer zu den Stegen 9. Sie ermöglichen somit eine federnde Nachgiebigkeit des Halteteiles 4 ebenfalls achsparallel, jedoch senkrecht zur seitlichen Auslenkung. Die Längsstege 10 sind an einem gabelartigen Führungsstück 11 befestigt, das sich zu beiden Seiten des Halteteiles 4 erstreckt. Das Führungsstück 11 ist über einen sich senkrecht zum Lichtleiterende 5 erstreckenden Quersteg 12 mit dem Kupplungsteil 2 verbunden. Dieser Quersteg 12 ermöglicht eine axiale Nachgiebigkeit des Führungsstückes 11 mit dem Halteteil 4. Das Führungsstück 11 ist auf seiner dem Lichtleiterende zugewandten Seite mit nockenartigen Vorsprüngen 13 versehen. Diese gleiten beim Zusammenstecken der Kupplungsteile über entsprechende Auflaufschrägen im hülsenartigen Kupplungsteil 1. Dadurch wird das Führungsstück 11 mit dem Halteteil 4 angehoben und in der Endphase des Steckvorganges wieder abgesenkt. Das Lichtleiterende 5 wird daher beim Zusammenstecken nicht longitudinal sondern transversal in die Längsrille 8 eingeführt. Dabei zentriert sich das Halteteil 4 mit dem Lichtleiterende 5 infolge der seitlichen Nachgiebigkeit von selbst in der Längsrille 8. Die Längsstege 10 ermöglichen es, daß das Lichtleiterende 5 im gekoppelten Zustand unter Spannung in den Grund der Längsrille 8 gedrückt wird. Der Quersteg 12 ermöglicht es, das Führungsstück 11 mit seinen Anschlagflächen 3 unter Vorspannung gegen die entsprechenden Gegenanschlagflächen zu drücken und somit in seiner axialen Lage zu sichern. Das Führungsstück ist mit seinen Vorsprüngen 13 so bemessen, daß es im abgesenkten Zustand eine achsparallele Lage des Halteteiles 4 gewährleistet. Der Abstand zwischen den Erhebungen 13 ist so bemessen, daß sie den Auflageblock 7 seitlich umgreifen.

In Fig. 3 sind die Verhältnisse im Bereich der Stoßstelle genauer dargestellt. Die beiden Lichtleiterenden 5 sind in den Längsnuten der Halteteile 4 durch Klebstoff 15 befestigt. Querrillen 16 im Halteteil 4 verhindern beim Kleben das Fließen des Klebstoffes in den Bereich, in dem sich die Faser in den Längsrillen des Auflageblockes 6 zentriert. Die Anschlagflächen 3 der beiden Kupplungsteile 2 stoßen in Höhe der Kopplungsstelle unter axialer Vorspannung aneinander. Die Stirnseiten der Lichtleiterenden 5 sind gegenüber diesen Auflageflächen um ein geringes Maß zurückgesetzt und überragen ebenfalls um ein geringes Maß die noch weiter zurückgesetzten Stirnseiten der Halteteile 4. Dadurch ist gewährleistet, daß zwischen den Halteteilen 4 und den Lichtleiterenden 5 beim Zentriervorgang keine Reibung entsteht, die die Beweglichkeit der Halteteile 4 beeinträchtigen könnte.

Im zusammengesteckten Zustand der beiden Kupplungsteile 2 mit dem mittleren Kupplungsteil 1 ist das Halteteil 4 von außen durch einen Durchbruch 17 im Bereich des Auflageblockes 6 zugänglich. Durch einen geeigneten Betätigungsmechanismus kann das Halteteil 4 von einer der Längsrillen 8 abgehoben, seitlich versetzt und in die benachbarte Längsrille 8 abgesenkt werden.

Auf diese Weise kann die optische Verbindung zwischen den beiden Lichtleiterenden 5 geschlossen oder aufgetrennt werden. Infolge der senkrechten Andruckkraft verrastet die Schaltzunge in jeder der beiden gewählten Längsrillen. Es ergibt sich somit ein bistabiler Schalter, bei dem zwischen den Schaltvorgängen keine Einwirkung von außen erforderlich ist. Es ist auch möglich, das Halteteil 4 mittels eines einfachen Werkzeuges von Hand zu betätigen, wenn z. B. in Verteilereinrichtungen von Fernsprechvermittlungsanlagen der Schaltzustand nicht zu häufig geändert werden soll.

## Patentansprüche

1. Schalter für Lichtleiter (5), deren Enden im gekoppelten Zustand fluchtend aufeinander ausgerichtet sind, wobei zumindest ein bewegliches Leiterende an einem transversal auslenkbaren Halteteil (4) befestigt und zumindest ein festes Leiterende an einem festen Trägerteil des Schalters gehalten ist, dadurch gekennzeichnet, daß das Halteteil (4) mit dem Schaltergehäuse über einen biegsamen Steg (9) verbunden ist, dessen Biegeachse (B) parallel zur Achse des Lichtleiterendes (5) verläuft.

2. Schalter nach Anspruch 1, dadurch gekennzeichnet, daß das feste Trägerteil als Auflageblock (6) mit mehreren eng benachbarten, in eine Auflagefläche (7) eingelassenen gemeinsamen Längsrillen ausgebildet ist, in denen die Lichtleiterenden (5) einliegen und daß das Halteteil (4) so ausgebildet ist, daß es senkrecht und parallel zur Auflagefläche (7) auslenkbar ist.

3. Schalter nach Anspruch 2, dadurch gekennzeichnet, daß der Steg (9) senkrecht auf zumindest einem biegsamen, beiderseitig eingespannten Längssteg (10) steht, dessen Biegeachsen ebenfalls parallel zum Lichtleiterende (5) aber seitlich von diesem angeordnet sind.

4. Schalter nach Anspruch 2 oder 3, dadurch gekennzeichnet, daß der Auflageblock (6) an einem ersten Kupplungsteil (1) und das Halteteil (4) an einem zweiten Kupplungsteil (2) gehalten ist, und daß die beiden Kupplungsteile (1, 2) buchsenartig ineinandergesteckt verrastet sind.

5. Schalter nach Anspruch 2, dadurch gekennzeichnet, daß das Halteteil (4) zumindest eine zur Auflagefläche (7) hin offene Längsnut aufweist, in der das Lichtleiterende (5) gehalten ist.

6. Schalter nach Anspruch 4, dadurch gekennzeichnet, daß zwei zweite Kupplungsteile (2) aus entgegengesetzter Lichtleiterrichtung mit dem ersten Kupplungsteil (1) zusammengesteckt sind, daß die beiden zweiten Kupplungsteile (2) stirnseitig unmittelbar zusammenstoßen und daß zumindest eines der beiden Halteteile (4) von außen zugänglich ist.

## Claims

1. Switch for light guides (5), the ends of which, in the coupled state, are in alignment, at least one movable guide end being secured on a transversely deflectable holding part (4) and at least one fixed guide end being held on a fixed supporting part of the switch, characterized in that the holding part (4) is connected to the switch housing via a flexible web (9), the neutral axis (B) of which extends parallel to the axis of the light guide end (5).

2. Switch according to Claim 1, characterized in that the fixed supporting part is designed as a supporting block (6) having a plurality of closely adjacent common longitudinal grooves let into a bearing surface (7) and in which the light guide ends (5) rest, and in that the holding part (4) is of a design such that it can be deflected perpendicularly and parallel to the bearing surface (7).

3. Switch according to Claim 2, characterized in that the web (9) stands perpendicularly on at least one flexible longitudinal web (10) which is held on both sides and the neutral axes of which are likewise arranged parallel to the light guide end (5) but to the side of the latter.

4. Switch according to Claim 2 or 3, characterized in that the supporting block (6) is held on a first coupling part (1) and the holding part (4) is held on a second coupling part (2), and in that the two coupling parts (1, 2) are in sleeve-like interlocking engagement.

5. Switch according to Claim 2, characterized in that the holding part (4) has at least one longitudinal groove which is open towards the bearing surface (7) and in which the light guide end (5) is held.

6. Switch according to Claim 4, characterized in that two second coupling parts (2) are joined together with the first coupling part (1), that the two second coupling parts (2) abut directly at their ends, and that at least one of the two holding parts (4) is accessible from outside.

## Revendications

1. Interrupteur pour un guide de lumière (5), dont les extrémités sont orientées de manière à être alignées entre elles à l'état accouplé, au moins une extrémité mobile du guide de lumière étant fixée à une partie de retenue (4) pouvant être déviée transversalement et au moins une extrémité fixe du guide étant maintenue sur une partie fixe de support de l'interrupteur, caractérisé par le fait que la partie de retenue (4) est reliée au boîtier de l'interrupteur par l'intermédiaire d'une barrette flexible (9), dont l'axe de flexion (B) est parallèle à l'axe de l'extrémité (5) du guide de lumière.

2. Interrupteur suivant la revendication 1, caractérisé par le fait que la partie fixe de support est réalisée sous la forme d'un bloc d'appui (6) comportant plusieurs rainures longitudinales communes voisines, très rapprochées les unes des autres, qui sont ménagées dans la surface d'appui (7) et dans lesquelles les extrémités (5) du guide de lumière sont insérées, et que la partie de retenue (4) est agencée de manière à pouvoir être déviée perpendiculairement et parallèlement à la surface d'appui (7).

3. Interrupteur suivant la revendication 2, caractérisé par le fait que la barrette (9) est perpendiculaire à au moins une barrette longitudinale flexible (10), qui est fixée par serrage sur ses deux côtés et dont les axes de flexion sont également parallèles à l'extrémité (5) du guide de lumière, mais en en étant décalés latéralement.

4. Interrupteur suivant la revendication 2 ou 3, caractérisé par le fait que le bloc d'appui (6) est maintenu sur un premier élément d'accouplement (1) et que la partie de retenue (4) est maintenue sur un second élément d'accouplement (2), et que les deux éléments d'accouplement (1, 2) sont encliquetés par enfichage réciproque à la manière d'une douille.

5. Interrupteur suivant la revendication 2, caractérisé par le fait que la partie de retenue (4) possède au moins une rainure longitudinale, qui s'ouvre en direction de la surface d'appui (7) et dans laquelle l'extrémité (5) du guide de lumière est maintenue.

6. Interrupteur suivant la revendication 4, caractérisé par le fait que deux seconds éléments d'accouplement (2) sont réunis par enfichage au premier élément d'accouplement (1), dans des directions opposées du guide de lumière, que les deux seconds éléments d'accouplement (2) sont directement réunis frontalement par aboutement et qu'au moins l'une des deux parties de retenue (4) est accessible de l'extérieur.

FIG 1

FIG 2

FIG 3